# EUROPÄISCHE PATENTSCHRIFT

(11) **EP 2 067 081 B1**
(45) Veröffentlichungstag und Bekanntmachung des Hinweises auf die Patenterteilung: **21.02.2018**
(21) Anmeldenummer: 07820669.5
(22) Anmeldetag: 27.09.2007
(51) Int. Cl.: G05B 19/05

(54) **VERFAHREN ZUM SYNCHRONISIEREN ZWEIER STEUEREINRICHTUNGEN UND REDUNDANT AUFGEBAUTE AUTOMATISIERUNGSVORRICHTUNG**
METHOD FOR SYNCHRONISING TWO CONTROL DEVICES AND REDUNDANT STRUCTURED AUTOMATION APPARATUS
PROCÉDÉ DESTINÉ À LA SYNCHRONISATION DE DEUX DISPOSITIFS DE COMMANDE ET DISPOSITIF D'AUTOMATISATION MONTÉ DE MANIÈRE REDONDANTE

(30) Priorität: 29.09.2006 EP 06020610
(43) Veröffentlichungstag der Anmeldung: 10.06.2009
(73) Patentinhaber: Siemens Aktiengesellschaft, 80333 München (DE)
(72) Erfinder: JORDAN, Carsten, 91056 Erlangen (DE); UNKELBACH, Michael, 91054 Buckenhof (DE)
(86) Internationale Anmeldenummer: PCT/EP2007/060281
(87) Internationale Veröffentlichungsnummer: WO 2008/037779

(56) Entgegenhaltungen:
- EP-A1- 0 394 514
- EP-A2- 0 636 956
- WO-A-01/37058
- WO-A-99/32947

## Beschreibung

Die vorliegende Erfindung betrifft ein Verfahren zum Synchronisieren einer ersten Steuereinrichtung und einer zweiten Steuereinrichtung einer redundant aufgebauten Automatisierungsvorrichtung zum Steuern eines technischen Prozesses, wobei die erste Steuereinrichtung und die zweite Steuereinrichtung miteinander verbunden sind und jeweils mehrere Funktionsbausteine enthalten, mittels denen Funktionen zum Steuern des technischen Prozesses umgesetzt sind. Die vorliegende Erfindung betrifft ferner eine redundant aufgebaute Automatisierungsvorrichtung.

Eine solche redundant aufgebaute Automatisierungsvorrichtung zum Steuern eines technischen Prozesses wird in Bereichen der Automatisierungstechnik eingesetzt, in denen erhöhte Anforderungen an die Verfügbarkeit und die Ausfallsicherheit der Automatisierungsvorrichtung gestellt werden. Dies sind Bereiche, in denen üblicherweise ein Stillstand einer Anlage, mit der der technische Prozess durchgeführt wird, sehr hohe Kosten verursachen würde oder für beteiligte Personen oder die Umwelt gefährlich sein könnte. Eine solche redundant aufgebaute Automatisierungsvorrichtung wird auch als hochverfügbar bezeichnet. Sie wird beispielsweise in der chemischen Industrie oder beim Betreiben eines Kraftwerks eingesetzt. Die Automatisierungsvorrichtung enthält zwei getrennt arbeitende Steuereinrichtungen, mit denen zentrale Funktionen zum Steuern des technischen Prozesses redundant ausgelegt sind. Im ungestörten Fall arbeiten die beiden Steuereinrichtungen üblicherweise gleiche Programme zum Steuern des Prozesses ab. Diese Programme enthalten Funktionsbausteine, mittels denen die Funktionen zum Steuern des technischen Prozesses umgesetzt sind. Solche Funktionsbausteine sind beispielsweise Logikfunktionen, wie z. B. eine UND-Funktion, arithmetische Funktionen, eine Zählfunktion, eine Monitorfunktion, mit der beispielsweise eine Temperaturüberschreitung überwacht werden kann, etc. Die Funktionsbausteine sind in dem Programm miteinander verkettet oder verschaltet. Die Programme und ihre Funktionsbausteine werden zyklisch und synchron abgearbeitet. Synchron bedeutet dabei, dass beim Ausführen der Funktionsbausteine auftretende interne Zustände der Funktionsbausteine in beiden Steuereinrichtungen gleich sind. Bei einer Zählfunktion mit einem Zähler als Funktionsbaustein ist dessen interner Zustand beispielsweise ein Zählerstand. Es ist immer nur eine der beiden Steuereinrichtungen aktiv, d. h. nur die aktive Steuereinrichtung steuert über ihre Ausgangs-Steuerdaten tatsächlich aktiv den technischen Prozess. Die andere Steuereinrichtung befindet sich in einem passiven Zustand. Um die passive Steuereinrichtung ständig aktuell auf dem Stand der aktiven Steuereinrichtung zu halten, werden auch der passive Steuereinrichtung vor Beginn eines jeden Zyklus Eingangsdaten zugeführt. Diese Eingangsdaten kommen üblicherweise von Feldeinheiten oder weiteren, ggf. redundanten Steuereinrichtungen. Solche Feldeinheiten, oder Feldgeräte, sind üblicherweise externe Einheiten oder Geräte, wie z. B. Sensoren oder Aktoren. In einem Störungsfall, in dem ein Fehler in einer der Steuereinrichtungen auftritt, oder im Falle einer Wartung einer der Steuereinrichtungen wird von der betroffenen Steuereinrichtung auf die ungestört arbeitende Steuereinrichtung umgeschaltet, so dass diese den technischen Prozess weiter steuert.

Nach Beheben des Fehlers oder nach Abschluss der Wartungsarbeiten muss die abgeschaltete Steuereinrichtung wieder auf den aktuellen Stand der Steuereinrichtung gebracht werden, die den technischen Prozess aktuell steuert. Dazu müssen alle internen Zustände der Funktionsbausteine der aktuell den Prozess steuernden Steuereinrichtung auch den Funktionsbausteinen der abgeschalteten Steuereinrichtung zugewiesen werden. Dazu wird üblicherweise am Beginn eines bestimmten Zyklus die Steuerung des Prozesses unterbrochen. Während dieser Unterbrechung werden alle Angaben über die internen Zustände auf einmal von der Steuereinrichtung, die den Prozess vor der Unterbrechung gesteuert hat, an die abgeschaltete Steuereinrichtung übermittelt. Da das Übermitteln der Angaben über die internen Zustände eine gewisse Zeitdauer benötigt, ist das Abarbeiten des Programms zum Steuern des technischen Prozesses durch beide Steuereinrichtungen nachteiligerweise während dieser Zeitdauer nicht möglich. Um diese Zeitdauer möglichst kurz zu halten, können die Angaben über die internen Zustände aller Funktionsbausteine zunächst gepackt, d. h. aneinander gereiht, in einen speziellen Speicherbereich geschrieben und dann die gepackten Angaben in die abgeschaltete Steuereinrichtung kopiert werden. Der abgeschalteten Steuereinrichtung müssen die Anfangsadressen der den einzelnen Funktionsbausteinen zugeordneten Angaben über die internen Zustände bekannt sein. Nur so kann sie die übermittelten Angaben über die internen Zustände ihren Funktionsbausteinen zuweisen. Dabei können leicht fehlerhafte Zuweisungen der Angaben über die internen Zustände zu den Funktionsbausteinen erfolgen. Derartige Verfahren und Systeme sind beispielsweise aus der WO 99/32947 und der EP 0 636 956 A2 bekannt

Der vorliegenden Erfindung liegt die Aufgabe zugrunde, ein zuverlässiges Synchronisieren von zwei Steuereinrichtungen einer Automatisierungsvorrichtung auf technisch einfache Weise zu ermöglichen.

Diese Aufgabe wird verfahrensseitig durch die technische Lehre des Anspruchs 1 und vorrichtungsseitig durch die technische Lehre des Anspruchs 10 gelöst. Vorteilhafte Ausgestaltungen der Erfindung können den abhängigen Ansprüchen entnommen werden.

Bei dem erfindungsgemäßen Verfahren führt die erste Steuereinrichtung ihre Funktionsbausteine zum Steuern des technischen Prozesses zyklisch aus, wodurch interne Zustände der Funktionsbausteine erzeugt werden. Während des Steuerns des technischen Prozesses durch die erste Steuereinrichtung werden Angaben über die internen Zustände ihrer Funktionsbausteine über mehrere Zyklen verteilt an die zweite Steuereinrichtung übermittelt. Ferner weist die zweite Steuereinrichtung die übermittelten Angaben über die internen Zustände ihren Funktionsbausteinen zu.

Die erfindungsgemäße redundant aufgebaute Automatisierungsvorrichtung zum Steuern eines technischen Prozesses weist eine erste Steuereinrichtung und eine zweite Steuereinrichtung auf, die miteinander verbunden sind und jeweils mehrere Funktionsbausteine enthalten, mittels denen Funktionen zum Steuern des technischen Prozesses umgesetzt sind. Die erste Steuereinrichtung und die zweite Steuereinrichtung sind zu ihrem Synchronisieren so ausgestaltet, dass die erste Steuereinrichtung ihre Funktionsbausteine zum Steuern des technischen Prozesses zyklisch ausführt, wodurch die Funktionsbausteine interne Zustände erzeugen. Ferner übermittelt die erste Steuereinrichtung während des Steuerns des technischen Prozesses Angaben über die internen Zustände ihrer Funktionsbausteine über mehrere Zyklen verteilt an die zweite Steuereinrichtung. Die zweite Steuereinrichtung weist die übermittelten Angaben über die internen Zustände ihren Funktionsbausteinen zu.

Gemäß der vorliegenden Erfindung werden die beiden Steuereinrichtungen über mehrere Zyklen hinweg synchronisiert. Die Angaben über die internen Zustände werden nicht auf einmal, sondern in mehreren Übertragungsvorgängen der zweiten Steuereinrichtung zugeführt. Dadurch ist es möglich, genügend kleine Mengen von Daten mit Angaben über die internen Zustände in den verschiedenen Zyklen von der ersten zu der zweiten Steuereinrichtung zu übermitteln. Die erste Steuereinrichtung kann diese kleinen Datenmengen in den Zyklen neben dem Steuern des technischen Prozesses, d. h. für das zyklische Ausführen der verschiedenen Funktionsbausteine, übermitteln. Es ist nicht notwendig, das Steuern des Prozesses durch die Steuereinrichtungen zu unterbrechen. Die Daten mit den Angaben über die internen Zustände können sukzessive zur zweiten Steuereinrichtung übermittelt werden. Die jeweilige Menge von Daten, die neben dem Steuern des Prozesses in einem der Zyklen von der ersten zu der zweiten Steuereinrichtung übertragen werden, kann vorteilhafterweise davon abhängen, wieviel Leistungskapazität die erste Steuereinrichtung für das Steuern des Prozesses und ggf. für andere Aufgaben benötigt, die in ihrer Priorität höher eingestuft sind, als das Synchronisieren mit der zweiten Steuereinrichtung. Die Steuereinrichtungen repräsentieren insbesondere Ablaufumgebungen für die Funktionsbausteine, um projektierbare und frei programmierbare Steuerungs- und Regelungsaufgaben durchzuführen. Die Funktionsbausteine der ersten und der zweiten Steuereinrichtung sind insbesondere gleich gestaltet. Interne Zustände von Funktionsbausteinen sind insbesondere Zustände oder Werte, die die Funktionsbausteine innehaben. Die internen Zustände können insbesondere auch Instanzinformationen oder -daten umfassen, die Altwerte aus vorhergehenden Zyklen beinhalten, die über mehrere Zyklen hinweg aufsummiert oder -integriert wurden. Sind die internen Zustände der gleich gestalteten Funktionsbausteine in beiden Steuereinrichtungen gleich, dann arbeiten beide Steuereinrichtungen synchron.

Des Weiteren werden die mehreren Funktionsbausteine in den mehreren Zyklen in einer vorgegebenen Ablaufreihenfolge ausgeführt und die Angaben über die internen Zustände der Funktionsbausteine in dieser vorgegebenen Ablaufreihenfolge übermittelt. Dies ermöglicht ein besonders effizientes Steuern des Übermittlungsvorgangs.

In einer vorteilhaften Ausgestaltung der Erfindung werden die Angaben über die internen Zustände der Funktionsbausteine der ersten Steuereinrichtung vor Beginn des Ausführens der Funktionsbausteine in den mehreren Zyklen an die zweite Steuereinrichtung übermittelt. Dies gewährleistet insbesondere eine gleichmäßige Auslastung der beiden Steuereinrichtungen. Die zweite Steuereinrichtung kann somit diese übermittelten Angaben den zugehörigen Funktionsbausteinen zuweisen. Bei Beginn des nächsten Zyklus können diese Funktionsbausteine mit den zugewiesenen, aktuellen internen Zuständen ausgeführt werden.

In einer weiteren, besonders vorteilhaften Ausgestaltung werden die Angaben über die internen Zustände der Funktionsbausteine der ersten Steuereinrichtung zusammen mit Eingangsdaten von Feldeinheiten und/oder weiteren Steuereinrichtungen an die zweite Steuereinrichtung übermittelt. Dies ermöglicht ein besonders effizientes Übermitteln von Informationen und Angaben zu der zweiten Steuereinrichtung. Das Steuern des Übermittelns der erforderlichen Informationen und Angaben kann einfach ausgestaltet werden.

Bevorzugt weist die zweite Steuereinrichtung die übermittelten Angaben über die internen Zustände über die mehreren Zyklen verteilt ihren Funktionsbausteinen zu. Dies gewährleistet insbesondere eine gleichmäßige Auslastung der zweiten Steuereinrichtung.

Besonders bevorzugt werden die Angaben über die internen Zustände der Funktionsbausteine funktionsbausteinweise übermittelt. Dies gewährleistet eine optimale Organisation und Steuerung des Übermittlungsvorgangs. Ferner ermöglicht dies der zweiten Steuereinrichtung ein funktionsbausteinweises Zuweisen der übermittelten Angaben zu ihren Funktionsbausteinen, wodurch der Zuweisungsvorgang einfach ausgestaltet sein kann. Die Anzahl der Funktionsbausteine, für die die Angaben über ihre internen Zustände übermittelt werden, ist dabei insbesondere nicht relevant. Es ist allerdings vorteilhafterweise sicherzustellen, dass durch das Synchronisieren schädliche Auswirkungen auf das zyklische Ausführen der Funtkionsbausteine vermieden werden.

Besonders bevorzugt wird zusätzlich ein Eingangswert eines Eingangs der Funktionsbausteine der ersten Steuereinrichtung an die zweite Steuereinrichtung übermittelt und die zweite Steuereinrichtung weist diesen übermittelten Eingangswert einem Eingang eines ihrer Funktionsbausteine zu. Dies gewährleistet ein besonders zuverlässiges und schnelles Synchronisieren der beiden Steuereinrichtungen.

Besonders bevorzugt wird der übermittelte Eingangswert von der zweiten Steuereinrichtung einem solchen Eingang eines ihrer Funktionsbausteine zugewiesen, der mit einem Ausgang eines anderen ihrer Funktionsbausteine verbunden ist, der in der vorgegebenen Ablaufreihenfolge dem einen ihrer Funktionsbausteine nachgeordnet ist. Dabei wurden dem einen ihrer Funktionsbausteine bereits übermittelte Angaben über interne Zustände und dem anderen ihrer Funktionsbausteine keine Angaben über interne Zustände zugewiesen. Dadurch lässt sich vor allem in dem Fall der rückgekoppelten Funktionsbausteine ein zuverlässiges Synchronisieren gewährleisten. Ein einmal synchronisierter Funktionsbaustein der zweiten Steuereinrichtung, dem die aktualisierten internen Zustände zugewiesen wurden, bleibt somit auch dann synchron mit dem entsprechenden Funktionsbaustein der ersten Steuereinrichtung, wenn nachgeordnete Funktionsbausteine noch nicht synchronisiert sind.

Vorzugsweise sind den jeweiligen Funktionsbausteinen eigene Speicherbereiche zugeordnet. Die den jeweiligen Funktionsbausteinen zugewiesenen Angaben über die internen Zustände werden in den den jeweiligen Funktionsbausteinen zugeordneten Speicherbereichen abgespeichert. Dadurch können fehlerhafte Überschreibungen von Angaben durch andere Funktionsbausteine verhindert werden. Ferner wird dadurch eine besonders freie und sichere Programmierung der Funktionsbausteine und der Ablaufumgebungen ermöglicht. Die eigenen Speicherbereiche sind insbesondere durch ein Betriebssystem der Steuereinrichtungen geschützt, so dass Zeigerüberschreitungen verhindert werden.

Nachfolgend werden die Erfindung und ihre Vorteile anhand von Beispielen und Ausführungsbeispielen und der beigefügten Zeichnung näher erläutert. Es zeigen:
- FIG 1: eine schematische Darstellung einer erfindungsgemäßen, redundant aufgebauten Automatisierungsvorrichtung,
- FIG 2: eine schematische Darstellung einer ersten und zweiten Steuereinrichtung der redundant aufgebauten Automatisierungsvorrichtung mit nicht rückgekoppelten Funktionsbausteinen und
- FIG 3: eine schematische Darstellung der ersten und zweiten Steuereinrichtung mit rückgekoppelten Funktionsbausteinen.

In den Figuren sind nachfolgend gleiche oder funktionsgleiche Elemente - sofern nichts anderes angegeben ist - mit denselben Bezugszeichen versehen.

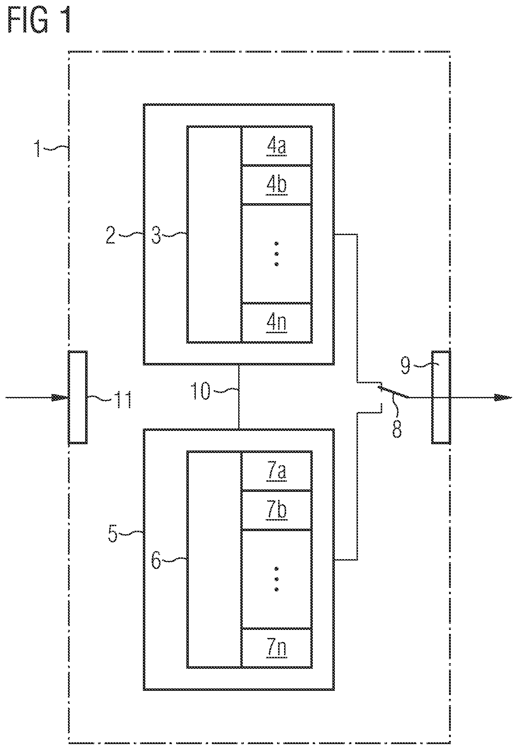

FIG 1 zeigt eine schematische Darstellung einer erfindungsgemäßen, redundant aufgebauten Automatisierungsvorrichtung 1 zum Steuern eines technischen Prozesses, der in einer Anlage ausgeführt wird. Eine solche Anlage kann beispielsweise eine Kraftwerksanlage oder eine chemische Anlage sein. Die Automatisierungsvorrichtung 1 enthält eine erste Steuereinrichtung 2, die einen Speicher 3 aufweist. In dem Speicher 3 ist ein Steuerprogramm abgelegt, das als Ablaufsteuerung zum Steuern des Prozesses von der ersten Steuereinrichtung 2 ausgeführt wird und in dem zusammengestellte Funktionen, Parameter und sonstige Daten enthalten sind. Das Steuerprogramm enthält eine Vielzahl von Funktionsbausteinen, mit denen bestimmte Teil-Funktionalitäten zum Steuern des Prozesses mittels der Automatisierungsvorrichtung ausführbar sind. Diese Funktionsbausteine sind in einer bestimmten Weise miteinander verschaltet und tauschen, je nach Verschaltung, Daten untereinander aus. Beim Ausführen des Steuerprogramms durch die erste Steuervorrichtung 2 nehmen die Funktionsbausteine bestimmte interne Zustände ein. Der Speicher 3 ist in verschiedene Speicherbereiche 4a-4n unterteilt. Diese Speicherbereiche 4a-4n sind den verschiedenen Funktionsbausteinen des Steuerprogramms zugeordnet. Dabei ist jedem der Funktionsbausteine ein eigener Speicherbereich 4a-4n zugeordnet, auf den er zugreifen kann. In den Speicherbereichen 4a-4n werden Angaben über die internen Zustände der Funktionsbausteine und sonstige Daten abgespeichert.

Die Automatisierungsvorrichtung 1 enthält ferner eine zweite Steuereinrichtung 5. Der Aufbau der zweiten Steuereinrichtung 5 entspricht im Wesentlichen demjenigen der ersten Steuereinrichtung 2. Die zweite Steuereinrichtung 5 enthält einen Speicher 6, in dem das gleiche Steuerprogramm abgespeichert ist, wie in dem Speicher 3. Dementsprechend weist auch der Speicher 6 die Vielzahl von Funktionsbausteinen auf. Die Funktionsbausteine der zweiten Steuereinrichtung 5 entsprechen denjenigen der ersten Steuereinrichtung 2. Die Funktionsbausteine beider Steuereinrichtungen 2, 5 sind gleich aufgebaut. Der Speicher 6 ist in verschiedene Speicherbereiche 7a-7n unterteilt. Diese Speicherbereiche 7a-7n sind den verschiedenen Funktionsbausteinen des in der zweiten Steuereinrichtung 5 enthaltenen Steuerprogramms zugeordnet. Dabei ist jedem der Funktionsbausteine ein eigener Speicherbereich 7a-7n zugeordnet, auf den er zugreifen kann. In den Speicherbereichen 7a-7n werden Angaben über die internen Zustände der Funktionsbausteine und sonstige Daten abgespeichert. Neben den beiden Steuereinrichtungen 2, 5 kann die Automatisierungsvorrichtung weitere, gegebenenfalls gleich ausgestaltete Steuereinrichtungen aufweisen.

Die beiden Steuereinrichtungen 2, 5 stellen Ablaufumgebungen dar, mit denen Steuerungs- und Regelungsaufgaben zum Steuern des technischen Prozesses durchgeführt werden können. Mittels der beiden Steuereinrichtungen 2, 5 ist die Automatisierungsvorrichtung redundant aufgebaut. Beide Steuereinrichtungen 2, 5 sind in einer Normalbetriebsweise gleich ausgestaltet und führen die in ihnen enthaltenen gleichen Steuerprogramme parallel aus. Dabei werden die Funktionsbausteine zyklisch ausgeführt. In der Normalbetriebsweise nehmen die Funktionsbausteine beider Steuereinrichtungen 2, 5 zu jedem Zeitpunkt gleiche interne Zustände ein. Beide Steuereinrichtungen 2, 5 arbeiten synchron und sind somit in der Lage, den Prozess zu steuern. Die Automatisierungsvorrichtung 1 steuert die beiden Steuereinrichtungen 2, 5 so, dass jeweils eine von ihnen aktiv geschaltet ist. Aktiv bedeutet in diesem Zusammenhang, dass die aktiv geschaltete Steuereinrichtung tatsächlich den Prozess steuert, d. h. dass von ihr erzeugte Ausgangsdaten an die zu steuernde Anlage ausgegeben werden. Die andere Steuereinrichtung ist in dann passiv geschaltet. D. h., die passive Steuereinrichtung führt zwar das Steuerprogramm aus, ihre dabei erzeugten Ausgangsdaten werden aber nicht an die Anlage weitergeleitet. Im Ausführungsbeispiel nach FIG 1 sind die erste Steuereinrichtung 2 und die zweite Steuereinrichtung 5 mit einem Schalter 8 verbunden, über den entweder ein Ausgang der ersten Steuereinrichtung 2 oder ein Ausgang der zweiten Steuereinrichtung 5 mit einem Ausgang 9 der Automatisierungsvorrichtung 1 verbunden werden kann. Über den Ausgang 9 ist die Automatisierungsvorrichtung 1 mit der zu steuernden technischen Anlage verbunden.

Die erste Steuereinrichtung 2 und die zweite Steuereinrichtung 5 sind über eine Kommunikationsleitung 10 miteinander verbunden. Über die Kommunikationsleitung 10 können die beiden Steuereinrichtungen 2, 5 Daten untereinander austauschen. Insbesondere können die beiden Steuereinrichtungen 2, 5 über die Kommunikationsleitung 10 Angaben über die internen Zustände ihrer jeweiligen Funktionsbausteine zu der jeweils anderen Steuereinrichtung 2, 5 übermitteln. Dadurch kann die Automatisierungsvorrichtung 1 ihre beiden Steuereinrichtungen 2, 5 synchron halten.

Die Kommunikationsleitung 10 wird ferner dazu benutzt, die beiden Steuereinrichtungen 2, 5 zu synchronisieren, falls eine der beiden Steuereinrichtungen 2, 5 abgeschaltet werden musste, beispielsweise in einem Fehlerfall oder bei einer erforderlichen Wartung, etc. In einem solchen Fall führt nur eine der beiden Steuereinrichtungen 2, 5 das Steuerprogramm aus. Die internen Zustände der Funktionsbausteine der anderen, abgeschalteten Steuereinrichtung stimmen dann auch nach Beheben des Fehlers oder nach Abschluss der Wartungsarbeiten nicht mit den internen Zuständen der Funktionsbausteine der regulär weiter arbeitenden Steuereinrichtung überein. Zum erneuten Synchronisieren der beiden Steuereinrichtungen, um die internen Zustände der regulär arbeitenden Steuereinrichtung auf die abgeschaltete Steuereinrichtung zu übertragen, können Angaben über die internen Zustände über die Kommunikationsleitung 10 der anderen Steuereinrichtung übermittelt werden.

Diese speichert die übermittelten Angaben dann in den Speicherbereichen ihres Speichers ab. War eine der beiden Steuereinrichtungen 2, 5 abgeschaltet, dann werden die aktuellen internen Zustände der nicht abgeschalteten, regulär arbeitenden Steuereinrichtung erfindungsgemäß über mehrere Zyklen des Ausführens der Funktionsbausteine verteilt, schrittweise über die Kommunikationsleitung 10 an die abgeschaltete Steuereinrichtung übermittelt.

Die Automatisierungsvorrichtung 1 hat einen Eingang 11, über den sie mit Feldgeräten, wie z. B. Sensoren und Aktoren, und anderen Automatisierungs- oder Steuereinrichtungen verbunden ist. An dem Eingang 11 empfängt die Automatisierungsvorrichtung 1 von diesen Geräten und Einrichtungen übermittelte Signale und Daten, die beiden Steuereinrichtungen 2, 5 zugeführt werden. Dies erfolgt hier jeweils vor Beginn der Zyklen zum Ausführen der Funktionsbausteine.

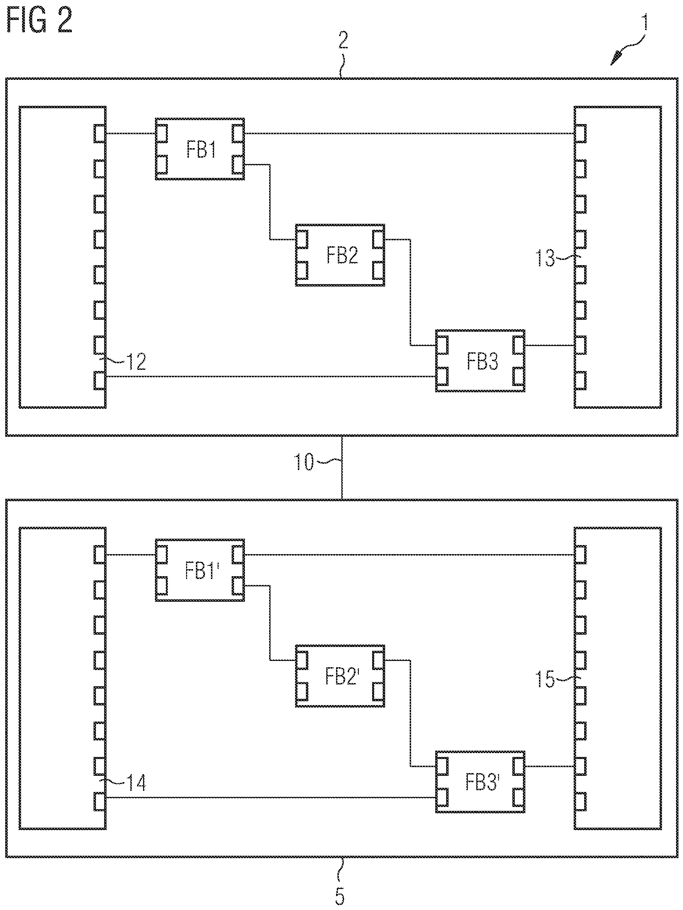

FIG 2 zeigt eine schematische Darstellung der ersten Steuereinrichtung 2 und der zweiten Steuereinrichtung 5 der redundant aufgebauten Automatisierungsvorrichtung 1. Die erste Steuereinrichtung 2 weist hier vereinfacht drei Funktionsbausteine FB1, FB2 und FB3 auf, die miteinander verschaltet sind. Die erste Steuereinrichtung 2 weist ferner einen Eingang 12 auf, an dem sie Eingangsdaten von Feldgeräten und/oder weiteren Steuereinrichtungen oder Automatisierungsvorrichtungen empfängt. Ein Ausgang 13 der ersten Steuereinrichtung 2 ist zur Ausgabe von Daten mit den Feldgeräten und/oder den weiteren Steuereinrichtungen oder Automatisierungsvorrichtungen verbunden. Ferner ist er mit dem Schalter 8 verbunden. Der Eingang 12 ist mit einem Eingang des Funktionsbausteins FB1 und mit einem Eingang des Funktionsbausteins FB3 verbunden. Ein Ausgang des Funktionsbausteins FB1 ist mit dem Ausgang 13 und ein weiterer Ausgang des Funktionsbausteins FB1 mit einem Eingang des Funktionsbausteins FB2 verbunden. Ein Ausgang des Funktionsbausteins FB2 ist mit einem weiteren Eingang des Funktionsbausteins FB3 verbunden. Die Funktionsbausteine FB1, FB2 und FB3 sind hier in Reihe und ohne Rückkopplung miteinander verschaltet. Rückkopplung bedeutet in diesem Zusammenhang, dass ein Ausgang eines in der Ablaufreihenfolge der Funktionsbausteine FB1, FB2, FB3 nachgestellten Funktionsbausteins auf den Eingang eines vorangestellten Funktionsbausteins geführt ist.

Die zweite Steuereinrichtung 5 ist entsprechend der ersten Steuereinrichtung 2 aufgebaut. Die zweite Steuereinrichtung 5 weist somit drei Funktionsbausteine FB1', FB2' und FB3' auf, die miteinander verschaltet sind. Die zweite Steuereinrichtung 5 weist einen Eingang 14 auf, an dem sie Eingangsdaten von Feldgeräten und/oder weiteren Steuereinrichtungen oder Automatisierungsvorrichtungen empfängt. Diese Eingangsdaten können der zweiten Steuereinrichtung 5 auch über die Kommunikationsleitung 10 von der ersten Steuereinrichtung 2 übermittelt werden. Ein Ausgang 15 der zweiten Steuereinrichtung 5 ist zur Ausgabe von Daten mit den Feldgeräten und/oder den weiteren Steuereinrichtungen oder Automatisierungsvorrichtungen verbunden. Ferner ist er mit dem Schalter 8 verbunden. Der Eingang 14 ist mit einem Eingang des Funktionsbausteins FB1' und mit einem Eingang des Funktionsbausteins FB3' verbunden. Ein Ausgang des Funktionsbausteins FB1' ist mit dem Ausgang 15 und ein weiterer Ausgang des Funktionsbausteins FB1' mit einem Eingang des Funktionsbausteins FB2' verbunden. Ein Ausgang des Funktionsbausteins FB2' ist mit einem weiteren Eingang des Funktionsbausteins FB3' verbunden. Die Funktionsbausteine FB1', FB2' und FB3' sind in Reihe und ohne Rückkopplung miteinander verschaltet.

Die erste Steuereinrichtung 2 ist hier die aktive Steuereinrichtung, die den technischen Prozess steuert. Die zweite Steuereinrichtung 5 ist passiv geschaltet und war, beispielsweise für einige Stunden, aufgrund eines aufgetretenen Fehlers abgeschaltet. Im normalen Betrieb der ersten Steuereinrichtung 2 zum Steuern des Prozesses werden die Funktionsbausteine FB1, FB2, FB3 sequentiell und zyklisch ausgeführt. Dabei nehmen die Funktionsbausteine FB1, FB2, FB3 interne Zustände an, die sich in jedem durchgeführten Zyklus verändern.

Dadurch, dass die zweite Steuereinrichtung 5 abgeschaltet war, und somit ihre Funktionsbausteine FB1', FB2', FB3' nicht ausgeführt wurden, sind deren interne Zustände nicht auf dem aktuellen Stand. Durch ein schrittweises Aktualisieren der internen Zustände der Funktionsbausteine FB1', FB2', FB3' werden diese mit den Funktionsbausteinen FB1, FB2, FB3 synchronisiert. Dabei wird hier in der Reihenfolge der zyklischen Abarbeitung oder Ausführung vorgegangen.

Im vorliegenden Beispiel werden vor dem ersten Zyklus die Eingangsdaten von den Feldgeräten und/oder den weiteren Steuereinrichtungen oder Automatisierungsvorrichtungen von der ersten Steuereinrichtung 2 über die Kommunikationsleitung 10 zu der zweiten Steuereinrichtung 5 übermittelt. Zusätzlich werden vor dem ersten Zyklus Angaben über den internen Zustand des Funktionsbausteins FB1 von der ersten Steuereinrichtung 2 über die Kommunikationsleitung 10 zu der zweiten Steuereinrichtung 5 übermittelt. Diese Angaben über den internen Zustand werden dann dem Funktionsbaustein FB1' von der zweiten Steuereinrichtung 5 zugewiesen. Anschließend startet dann der erste Zyklus in beiden Steuereinrichtungen 2, 5. Dabei werden die Funktionsbausteine FB1 und FB1' ausgeführt. Da die internen Zustände beider Funktionsbausteine FB1 und FB1' zuvor synchronisiert wurden und beiden Funktionsbausteinen FB1 und FB1' die gleichen Eingangsdaten zugeführt wurden, sind die Ausgänge der beiden Funktionsbausteine FB1 und FB1' oder deren Ausgangsdaten nach dem ersten Zyklus gleich. Da auch in nachfolgenden Zyklen die Eingangsdaten für die beiden Funktionsbausteinen FB1 und FB1' immer gleich sind, werden sie auch in diesen nachfolgenden Zyklen nicht asynchron. Die internen Zustände der beiden Funktionsbausteine FB1 und FB1' werden sich zukünftig bei gleichen Eingangsdaten auch gleich einstellen. Die Funktionsbausteine FB1 und FB1' müssen in nachfolgenden Zyklen nicht mehr synchronisiert werden.

Vor einem zweiten Zyklus werden zusätzlich zu den Eingangsdaten auch Angaben über den internen Zustand des Funktionsbausteins FB2 von der ersten Steuereinrichtung 2 über die Kommunikationsleitung 10 zu der zweiten Steuereinrichtung 5 übermittelt. Diese übermittelten Angaben über den internen Zustand werden dann dem Funktionsbaustein FB2' von der zweiten Steuereinrichtung 5 zugewiesen. Anschließend startet dann der zweite Zyklus in beiden Steuereinrichtungen 2, 5. Dabei werden die Funktionsbausteine FB2 und FB2' ausgeführt. Da die internen Zustände beider Funktionsbausteine FB2 und FB2' zuvor synchronisiert wurden und den Eingängen beider Funktionsbausteine FB2 und FB2' gleiche Eingangsdaten zugeführt wurden, sind die Ausgänge der beiden Funktionsbausteine FB2 und FB2' oder deren Ausgangsdaten nach dem zweiten Zyklus gleich. Die beiden Funktionsbausteinen FB2 und FB2' bleiben auch in nachfolgenden Zyklen synchron. Die internen Zustände der beiden Funktionsbausteine FB2 und FB2' werden sich auch zukünftig bei gleichen Eingangsdaten der beiden Steuereinrichtungen 2, 5 und zuvor synchronisierten Funktionsbausteinen FB1 und FB1' gleich einstellen. Die Funktionsbausteine FB2 und FB2' müssen in nachfolgenden Zyklen nicht mehr synchronisiert werden.

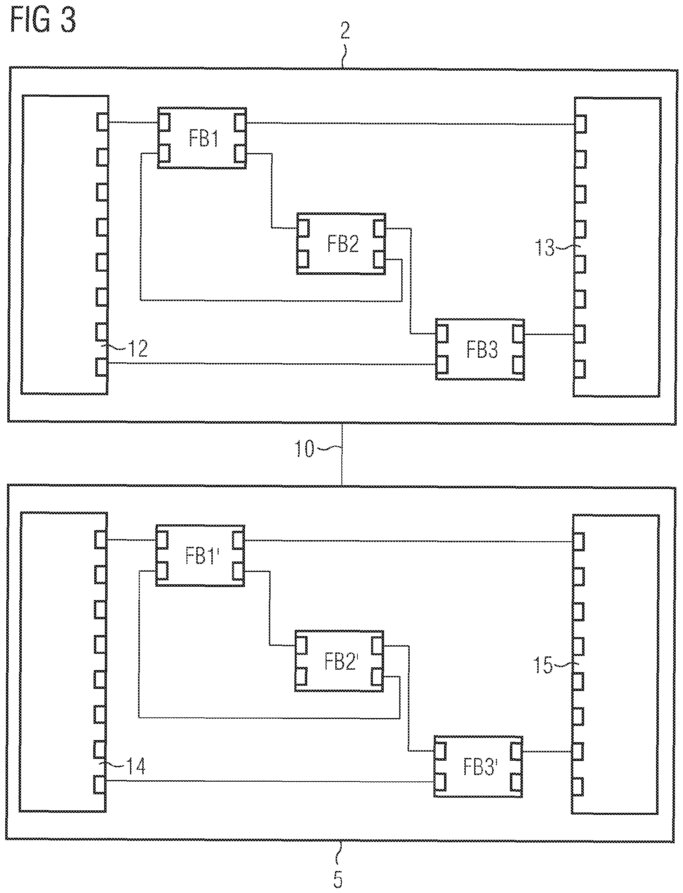

Entsprechendes gilt für das Synchronisieren der Funktionsbausteine FB3 und FB3' in einem anschließenden dritten Zyklus. Dabei werden Angaben über den internen Zustand des Funktionsbausteins FB3 von der ersten Steuereinrichtung 2 über die Kommunikationsleitung 10 zu der zweiten Steuereinrichtung 5 übermittelt und von dieser dem Funktionsbaustein FB3' zugewiesen. Nach dem dritten Zyklus sind alle Funktionsbausteine der ersten Steuereinrichtung 2 und der zweiten Steuereinrichtung 5, und damit die beiden Steuereinrichtungen selbst, synchronisiert. Die zweite Steuereinrichtung 5 ist somit wieder in der Lage die Steuerung des technischen Prozesses zu übernehmen. Die von der ersten Steuereinrichtung 2 übermittelten Angaben über die internen Zustände ihrer Funktionsbausteine FB1, FB2, FB3 werden von der zweiten Steuereinrichtung 5 in den Speicherbereichen 7a-7n abgespeichert, die den Speicherbereichen FB1', FB2', FB3' zugeordnet sind. FIG 3 zeigt eine weitere schematische Darstellung der ersten Steuereinrichtung 2 und der zweiten Steuereinrichtung 5 der redundant aufgebauten Automatisierungsvorrichtung 1. Der Aufbau der beiden Steuereinrichtungen 2, 5 entspricht weitgehend demjenigen der Steuereinrichtungen gemäß des Beispiels nach FIG 2. Allerdings sind die Verschaltungen der Funktionsbausteine FB1 und FB2 sowie FB1' und FB2' verändert. Im vorliegenden Beispiel sind Rückkopplungsverbindungen vorhanden. Ein Ausgang des Funktionsbausteins FB2 ist mit einem Eingang des Funktionsbausteins FB1 und entsprechend ein Ausgang des Funktionsbausteins FB2' mit einem Eingang des Funktionsbausteins FB1' verbunden. Beim sukzessiven Synchronisieren der Funktionsbausteine der beiden Steuereinrichtungen 2, 5 tritt somit das Problem auf, dass trotz eines Übermittelns und Zuweisens von Angaben über den internen Zustand des Funktionsbausteins FB1 zu dem Funktionsbaustein FB1' die den Eingängen der Funktionsbausteine FB1 und FB1' zugeführten Eingangsdaten aufgrund der Rückkopplung und der unterschiedlichen internen Zustände der beiden Funktionsbausteine FB2 und FB2' unterschiedlich sind. Nach dem ersten Zyklus sind die beiden Funktionsbausteine FB1 und FB1' somit wieder asynchron.

Um dies zu vermeiden, werden zum Synchronisieren zusätzlich zu den Eingangsdaten von den Feldgeräten und/oder den weiteren Steuereinrichtungen oder Automatisierungsvorrichtungen sowie den Angaben über den internen Zustand eines der Funktionsbausteine FB1, FB2, FB3 auch Eingangswerte für diejenigen Eingänge der Funktionsbausteine FB1', FB2', FB3' von der ersten Steuereinrichtung 2 über die Kommunikationsleitung 10 zu der zweiten Steuereinrichtung 5 übermittelt, die über eine Rückkopplungsverbindung mit Ausgängen eines in der Ablauf- oder Ausführreihenfolge nachgestellten Funktionsbausteins verbunden sind. Im Beispiel gemäß FIG 3 werden somit Eingangswerte des mit dem Ausgang des Funktionsbausteins FB2 verbundenen Eingangs des Funktionsbausteins FB1 übermittelt. Diese übermittelten Eingangswerte werden dann von der zweiten Steuereinrichtung 5 dem Eingang des Funktionsbausteins FB1' zugewiesen, der mit dem Ausgang des Funktionsbausteins FB2' verbunden ist. Auf diese Weise können auch bei einer Rückkopplung in der Verschaltung der Funktionsbausteine die beiden Steuereinrichtungen 2, 5 auf einfache Weise synchronisiert werden.

Es ist auch möglich, die Eingangswerte für die Funktionsbausteine der abgeschalteten Steuereinrichtung 5 immer und zusätzlich zu den Angaben über die internen Zustände von der aktiven Steuereinrichtung 2 zu übermitteln. Vorteilhafterweise kann das Synchronisieren im Falle der Rückkopplung optimiert werden, indem nur Eingangswerte für solche Eingänge von bereits synchronisierten Funktionsbausteinen übermittelt werden, die über eine Rückkopplungsverbindung mit einem Funktionsbaustein verbunden sind, der noch nicht synchronisiert wurde.

Die beschriebene Erfindung kann vorteilhafterweise auch dann eingesetzt werden, wenn einzelne Funktionsbausteine nicht in jedem Zyklus ausgeführt werden. Auch in diesem Fall wiederholt sich die Ablaufreihenfolge nach einer bestimmten Anzahl von Grundzyklen.

Es können vorteilhafterweise vollständig objektorientiert programmierte Steuereinrichtungen oder Ablaufumgebungen mit Komponenten als Funktionsbausteinen synchronisiert werden, bei denen Daten und interne Zustände gekapselt sind und Zugriffe nur über definierte Schnittstellen möglich sind. In einem solchen Fall stellen die Funktionsbausteine Schnittstellen zur Verfügung, mittels denen die Steuereinrichtung oder Ablaufumgebung die Synchronisationsdaten auslesen und dem zu synchronisierenden Funktionsbaustein übermitteln und zuweisen kann.

## Patentansprüche

1. Verfahren zum Synchronisieren einer ersten Steuereinrichtung (2) und einer zweiten Steuereinrichtung (5) einer redundant aufgebauten Automatisierungsvorrichtung (1) zum Steuern eines technischen Prozesses, wobei die erste Steuereinrichtung (2) und die zweite Steuereinrichtung (5) miteinander verbunden sind und jeweils mehrere Funktionsbausteine (FB1, FB2, FB3, FB1', FB2', FB3') enthalten, mittels denen Funktionen zum Steuern des technischen Prozesses umgesetzt sind, **dadurch gekennzeichnet, dass**
die mehreren Funktionsbausteine (FB1, FB2, FB3, FB1', FB2', FB3') in mehreren Zyklen in einer vorgegebenen Ablaufreihenfolge ausgeführt werden, und
- die erste Steuereinrichtung (2) ihre Funktionsbausteine (FB1, FB2, FB3) zum Steuern des technischen Prozesses zyklisch ausführt, wodurch interne Zustände der Funktionsbausteine (FB1, FB2, FB3) erzeugt werden,
- während des Steuerns des technischen Prozesses durch die erste Steuereinrichtung (2) Angaben über die internen Zustände ihrer Funktionsbausteine (FB1, FB2, FB3) über die mehreren Zyklen verteilt in der vorgegebenen Ablaufreihenfolge an die zweite Steuereinrichtung (5) übermittelt werden und
- die zweite Steuereinrichtung (5) die übermittelten Angaben über die internen Zustände ihren Funktionsbausteinen (FB1', FB2', FB3') zuweist.

2. Verfahren nach Anspruch 1,
**dadurch gekennzeichnet, dass** die Angaben über die internen Zustände der Funktionsbausteine (FB1, FB2, FB3) der ersten Steuereinrichtung (2) vor Beginn des Ausführens der Funktionsbausteine (FB1, FB2, FB3, FB1', FB2', FB3') in den mehreren Zyklen an die zweite Steuereinrichtung (5) übermittelt werden.

3. Verfahren nach Anspruch 1 oder 2,
**dadurch gekennzeichnet, dass** die Angaben über die internen Zustände der Funktionsbausteine (FB1, FB2, FB3) der ersten Steuereinrichtung (2) zusammen mit Eingangsdaten von Feldeinheiten und/oder weiteren Steuereinrichtungen an die zweite Steuereinrichtung (5) übermittelt werden.

4. Verfahren nach einem der vorhergehenden Ansprüche,
**dadurch gekennzeichnet, dass** die zweite Steuereinrichtung (5) die übermittelten Angaben über die internen Zustände über die mehreren Zyklen verteilt ihren Funktionsbausteinen (FB1', FB2', FB3') zuweist.

5. Verfahren nach einem der vorhergehenden Ansprüche,
**dadurch gekennzeichnet, dass** die Angaben über die internen Zustände der Funktionsbausteine (FB1, FB2, FB3) funktionsbausteinweise übermittelt werden.

6. Verfahren nach einem der vorhergehenden Ansprüche,
**dadurch gekennzeichnet, dass** zusätzlich ein Eingangswert eines Eingangs der Funktionsbausteine (FB1, FB2, FB3) der ersten Steuereinrichtung (2) an die zweite Steuereinrichtung (5) übermittelt wird und die zweite Steuereinrichtung (5) diesen übermittelten Eingangswert einem Eingang eines ihrer Funktionsbausteine (FB1', FB2', FB3') zuweist.

7. Verfahren nach Anspruch 5 und 6,
**dadurch gekennzeichnet, dass** der übermittelte Eingangswert von der zweiten Steuereinrichtung (5) einem solchen Eingang eines ihrer Funktionsbausteine (FB1', FB2', FB3') zugewiesen wird, der mit einem Ausgang eines anderen ihrer Funktionsbausteine (FB1', FB2', FB3') verbunden ist, der in der vorgegebenen Ablaufreihenfolge dem einen ihrer Funktionsbausteine (FB1', FB2', FB3') nachgeordnet ist, wobei dem einen ihrer Funktionsbausteine (FB1', FB2', FB3') bereits übermittelte Angaben über interne Zustände und dem anderen ihrer Funktionsbausteine (FB1', FB2', FB3') keine Angaben über interne Zustände zugewiesen wurden.

8. Verfahren nach einem der vorhergehenden Ansprüche,
**dadurch gekennzeichnet, dass** den jeweiligen Funktionsbausteinen (FB1, FB2, FB3, FB1', FB2', FB3') eigene Speicherbereiche (4a-4n, 7a-7n) zugeordnet sind und die den jeweiligen Funktionsbausteinen (FB1, FB2, FB3, FB1', FB2', FB3') zugewiesenen Angaben über die internen Zustände in den den jeweiligen Funktionsbausteinen (FB1, FB2, FB3, FB1', FB2', FB3') zugeordneten Speicherbereichen (4a-4n, 7a-7n) abgespeichert werden.

9. Redundant aufgebaute Automatisierungsvorrichtung (1) zum Steuern eines technischen Prozesses, die eine erste Steuereinrichtung (2) und eine zweite Steuereinrichtung (5) aufweist, die miteinander verbunden sind und jeweils mehrere Funktionsbausteine (FB1, FB2, FB3, FB1', FB2', FB3') enthalten, mittels denen Funktionen zum Steuern des technischen Prozesses umgesetzt sind,
**dadurch gekennzeichnet, dass**
die mehreren Funktionsbausteine (FB1, FB2, FB3, FB1', FB2', FB3') in mehreren Zyklen in einer vorgegebenen Ablaufreihenfolge ausgeführt werden, und wobei die erste Steuereinrichtung (2) und die zweite Steuereinrichtung (5) zu ihrem Synchronisieren so ausgestaltet sind, dass
- die erste Steuereinrichtung (2) ihre Funktionsbausteine (FB1, FB2, FB3) zum Steuern des technischen Prozesses zyklisch ausführt, wodurch die Funktionsbausteine (FB1, FB2, FB3) interne Zustände erzeugen,
- die erste Steuereinrichtung (2) während des Steuerns des technischen Prozesses Angaben über die internen Zustände ihrer Funktionsbausteine (FB1, FB2, FB3) über die mehreren Zyklen verteilt in der vorgegebenen Ablaufreihenfolge an die zweite Steuereinrichtung (5) übermittelt und
- die zweite Steuereinrichtung (5) die übermittelten Angaben über die internen Zustände ihren Funktionsbausteinen (FB1', FB2', FB3') zuweist.

## Claims

1. Method for synchronising a first control device (2) and a second control device (5) of a redundantly designed automation system (1) for controlling a technical process, wherein the first control device (2) and the second control device (5) are interconnected and each contain a plurality of function blocks (FB1, FB2, FB3, FB1', FB2', FB3') by means of which functions for controlling the technical process are implemented,
**characterised in that**
the plurality of function blocks (FB1, FB2, FB3, FB1', FB2', FB3') are executed in a plurality of cycles in a predefined runtime sequence, and
- the first control device (2) cyclically executes its function blocks (FB1, FB2, FB3) for controlling the technical process, thereby generating internal states of the function blocks (FB1, FB2, FB3),
- while the technical process is being controlled by the first control device (2), information about the internal states of its function blocks (FB1, FB2, FB3) is transmitted, distributed over a plurality of cycles in the predefined runtime sequence to the second control device (5) and
- the second control device (5) assigns the transmitted information about the internal states to its function blocks (FB1', FB2', FB3').

2. Method according to claim 1,
**characterised in that** the information about the internal states of the function blocks (FB1, FB2, FB3) of the first control device (2) is transmitted to the second control device (5) in the plurality of cycles prior to the start of execution of the function blocks (FB1, FB2, FB3, FB1', FB2', FB3').

3. Method according to claim 1 or 2,
**characterised in that** the information about the internal states of the function blocks (FB1, FB2, FB3) of the first control device (2) is transmitted to the second control device (5) together with input data from field units and/or other control devices.

4. Method according to one of the preceding claims,
**characterised in that** the second control device (5) assigns, distributed over the plurality of cycles, the transmitted information about the internal states to its function blocks (FB1', FB2', FB3').

5. Method according to one of the preceding claims,
**characterised in that** the information about the internal states of the function blocks (FB1, FB2, FB3) is transmitted function block by function block.

6. Method according to one of the preceding claims,
**characterised in that** an input value of an input of the function blocks (FB1, FB2, FB3) of the first control device (2) is additionally transmitted to the second control device (5) and the second control device (5) assigns said transmitted input value to an input of one of its function blocks (FB1', FB2', FB3').

7. Method according to claim 5 and 6,
**characterised in that** the transmitted input value is assigned by the second control device (5) to such an input of one of its function blocks (FB1', FB2', FB3') which is connected to an output of another of its function blocks (FB1', FB2', FB3') of lower order in the predefined runtime sequence than the one of its function blocks (FB1', FB2', FB3'), the one of its function blocks (FB1', FB2', FB3') already having been assigned information about internal states and the other of its function blocks (FB1', FB2', FB3') having been assigned no information about internal states.

8. Method according to one of the preceding claims,
**characterised in that** the respective function blocks (FB1, FB2, FB3, FB1', FB2', FB3') are allocated their own memory areas (4a-4n, 7a-7n) and the internal state information assigned to the respective function blocks (FB1, FB2, FB3, FB1', FB2', FB3') is stored in the memory areas (4a-4n, 7a-7n) allocated to the respective function blocks (FB1, FB2, FB3, FB1', FB2', FB3').

9. Redundantly designed automation system (1) for controlling a technical process, having a first control device (2) and a second control device (5) which are interconnected and which each contain a plurality of function blocks (FB1, FB2, FB3, FB1', FB2', FB3') by means of which functions for controlling the technical process are implemented,
**characterised in that**
the plurality of function blocks (FB1, FB2, FB3, FB1', FB2', FB3') are executed in a plurality of cycles in a predefined runtime sequence, and wherein the first control device (2) and the second control device (5) are configured for their synchronisation such that
- the first control device (2) cyclically executes its function blocks (FB1, FB2, FB3) for controlling the technical process, thereby generating internal states of the function blocks (FB1, FB2, FB3),
- while the technical process is being controlled, the first control device (2) transmits, distributed over a plurality of cycles in the predefined runtime sequence, information about the internal states of its function blocks (FB1, FB2, FB3) to the second control device (5) and
- the second control device (5) assigns the transmitted information about the internal states to its function blocks (FB1', FB2', FB3').

## Revendications

1. Procédé de synchronisation d'un premier dispositif (2) de commande et d'un deuxième dispositif (5) de commande d'une installation (1) d'automatisation constituée de manière redondante pour commander un processus technique, le premier dispositif (2) de commande et le deuxième dispositif (5) de commande étant reliés entre eux et contenant chacun plusieurs modules (FB1, FB2, FB3, FB1', FB2', FB3') fonctionnels au moyen desquels des fonctions peuvent êtres mises en oeuvre pour commander le processus technique, **caractérisé en ce que**
on réalise les plusieurs modules (FB1, FB2, FB3, FB1', FB2', FB3') fonctionnels en plusieurs cycles suivant une succession de déroulements donnée à l'avance et
- le premier dispositif (2) de commande exécute cycliquement ses modules (FB1, FB2, FB3) fonctionnels pour commander le processus technique, des états internes des modules (FB1, FB2, FB3) fonctionnels étant ainsi produit,
- pendant la commande du processus technique par le premier dispositif (2) de commande, il est transmis des indications sur les états internes de ses modules (FB1, FB2, FB3) fonctionnels, d'une manière répartie sur les plusieurs cycles suivant la succession de déroulements donnée à l'avance, au deuxième dispositif (5) de commande et
- le deuxième dispositif (5) de commande affecte, à ses modules (FB1', FB2', FB3') fonctionnels, les indications transmises sur les états internes.

2. Procédé suivant la revendication 1,
**caractérisé en ce que** les indications sur les états internes des modules (FB1, FB2, FB3) fonctionnels du premier dispositif (2) de commande sont transmis au deuxième dispositif (5) de commande avant le début de l'exécution des modules (FB1, FB2, FB3, FB1', FB2', FB3') fonctionnels dans les plusieurs cycles.

3. Procédé suivant la revendication 1 ou 2,
**caractérisé en ce que** les indications sur les états internes des modules (FB1, FB2, FB3) fonctionnels du premier dispositif (2) de commande sont transmises au deuxième dispositif (5) de commande, ensemble avec des données d'entrée d'unités sur site et/ou d'autres dispositifs de commande.

4. Procédé suivant l'une des revendications précédentes,
**caractérisé en ce que** le deuxième dispositif (5) de commande affecte à ses modules (FB1', FB2', FB3') fonctionnels, d'une manière répartie sur les plusieurs cycles, les indications transmises sur les états internes.

5. Procédé suivant l'une des revendications précédentes,
**caractérisé en ce que** les indications sur les états internes des modules (FB1, FB2, FB3) fonctionnels sont transmises module fonctionnel par module fonctionnel.

6. Procédé suivant l'une des revendications précédentes,
**caractérisé en ce qu'**en outre, une valeur d'entrée d'une entrée des modules (FB1, FB2, FB3) fonctionnels du premier dispositif (2) de commande est transmise au deuxième dispositif (5) de commande et le deuxième dispositif (5) de commande affecte cette valeur d'entrée transmise à une entrée de l'un de ses modules (FB1', FB2', FB3') fonctionnels.

7. Procédé suivant les revendications 5 et 6,
**caractérisé en ce que** la valeur d'entrée transmise est affectée, par le deuxième dispositif (5) de commande, à une entrée de l'un de ses modules (FB1', FB2', FB3') fonctionnels, qui est reliée à une sortie d'un autre de ses modules (FB1', FB2', FB3') fonctionnels disposé en aval dans la succession de déroulements donnée à l'avance du un de ses modules (FB1', FB2', FB3') fonctionnels, des indications sur des états internes étant affectées au un de ses modules (FB1', FB2', FB3') fonctionnels et des indications sur des états internes n'étant pas affectées à l'autre de ses modules (FB1', FB2', FB3') fonctionnels.

8. Procédé suivant l'une des revendications précédentes,
**caractérisé en ce qu'**aux modules (FB1, FB2, FB3, FB1', FB2', FB3') fonctionnels respectifs, sont affectées des parties (4a à 4n, 7a à 7n) de mémoire propres et les indications, affectées aux modules (FB1, FB2, FB3, FB1', FB2', FB3') fonctionnels respectifs, sur les états internes sont mémorisées dans les parties (4a à 4n, 7a à 7n) de mémoire affectées aux modules (FB1, FB2, FB3, FB1', FB2', FB3') fonctionnels respectifs.

9. Installation (1) d'automatisation constituée de manière redondante pour commander un processus technique, qui a un premier dispositif (2) de commande et un deuxième dispositif (5) de commande, qui sont reliés entre eux et qui comportent chacun plusieurs modules (FB1, FB2, FB3, FB1', FB2', FB3') fonctionnels au moyen desquels des fonctions sont mises en oeuvre pour commander le processus technique,
**caractérisé en ce que**
les plusieurs modules (FB1, FB2, FB3, FB1', FB2', FB3') fonctionnels sont exécutés dans plusieurs cycles suivant une succession de déroulements donnée à l'avance et le premier dispositif (2) de commande et le deuxième dispositif (5) de commande sont conformés, pour leur synchronisation, de manière à ce que
- le premier dispositif (2) de commande exécute, de manière cyclique, ses modules (FB1, FB2, FB3) fonctionnels pour commander le processus technique, les modules (FB1, FB2, FB3) produisant ainsi des états internes,
- le premier dispositif (2) de commande transmet au deuxième dispositif (5) de commande, pendant la commande du processus technique, des indications sur les états internes de ses modules (FB1, FB2, FB3) fonctionnels, d'une manière répartie sur les plusieurs cycles, dans la succession de déroulements donnée à l'avance et
- le deuxième dispositif (5) de commande affecte les indications transmises sur les états internes à ses modules (FB1', FB2', FB3') fonctionnels.
